# FASCICULE DE BREVET EUROPEEN

(11) **EP 2 826 123 B1**
(45) Date de publication et mention de la délivrance du brevet: **02.03.2016**
(21) Numéro de dépôt: 13709201.1
(22) Date de dépôt: 13.03.2013
(51) Int. Cl.: H02J 3/38

(54) **UNITE A ENERGIE RENOUVELABLE A CONNECTIQUE SIMPLIFIE**
ERNEUERBARE ENERGIEEINHEIT MIT VEREINFACHTEM ANSCHLUSS
RENEWABLE ENERGY UNIT HAVING A SIMPLIFIED CONNECTOR TECHNOLOGY

(30) Priorité: 14.03.2012 EP 12159515
(43) Date de publication de la demande: 21.01.2015
(73) Titulaire: Belenos Clean Power Holding AG, 2502 Bienne (CH)
(72) Inventeur: FRANCESCUTTO, Gianni, CH-2504 Bienne (CH); TOTH, Antoine, CH-2800 Delémont (CH); CLOSSET, Alexandre, 1313 Ferreyres (CH)
(74) Mandataire: Tournel, Maxime Jean-Joseph
(86) Numéro de dépôt international: PCT/EP2013/055161
(87) Numéro de publication internationale: WO 2013/135777

(56) Documents cités:
- US-A1- 2009 160 258
- US-A1- 2010 133 911

## Description

La présente invention concerne un dispositif électronique comprenant un module énergétique relié à un système onduleur, ledit module énergétique comprenant une pluralité de moyens pour produire de l'électricité à partir d'énergie renouvelable connectée en série, lesdits moyens pour produire de l'électricité à partir d'énergie renouvelable étant regroupés en groupe.

### ARRIERE PLAN TECHNOLOGIQUE

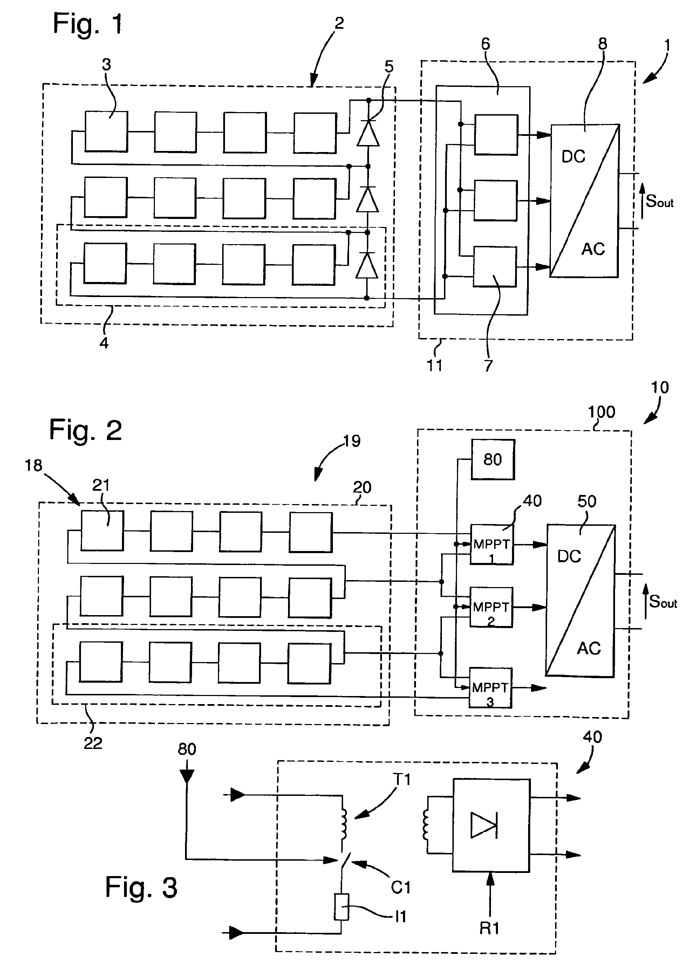

Il est connu des installations solaires qui équipent des habitations ou des bâtiments publics ou industriels. Ces installations solaires sont en général composés d'une pluralité d'unités solaires 1 visibles à la figure 1, chaque unité comprenant un panneau solaire 2 connecté à un système onduleur 11. Tous les systèmes onduleurs sont reliés à un système répartiteur qui est chargé d'envoyer l'électricité produite vers le réseau électrique public ou vers le réseau électrique de l'habitations ou du bâtiment public ou industriel. Ce répartiteur permet de vendre l'électricité produite par les panneaux solaires ou de l'utiliser afin d'être moins dépendant de l'électricité du réseau public.

Chaque panneau solaire comprend une pluralité de cellules photovoltaïques 3 comprenant chacune une borne positive et une borne négative. Ces cellules photovoltaïques sont connectées en série, chaque panneau solaire comprend donc une première cellule et une dernière cellule. Ces cellules photovoltaïques sont regroupées sous forme de groupes 4 composés du même nombre de cellules photovoltaïques. Par exemple, un panneau solaire comprenant douze cellules photovoltaïques est composé de trois groupes de quatre cellules photovoltaïques. En général, les cellules photovoltaïques sont réparties en lignes et colonnes et chaque ligne de cellules photovoltaïques forme un groupe.

Chaque panneau solaire comprend aussi une pluralité de diodes de protection 5 connectées en série, chaque diode de protection étant connectée en parallèles à l'un des groupes 4. On comprend alors que la borne négative de la première cellule photovoltaïque du groupe est connectée à l'anode de la diode et la borne positive de la dernière cellule photovoltaïque du groupe est connectée à la cathode de la diode. Cet agencement permet de protéger les cellules photovoltaïques en empêchant le courant d'un groupe de cellules photovoltaïque de se diriger vers les cellules photovoltaïques d'un autre groupe.

La borne positive de la première cellule photovoltaïque et la borne négative de la dernière cellule photovoltaïque sont reliées au système onduleur 11. Ce dernier comprend un bloc régulateur 6 comprenant une pluralité de circuits régulateurs 7 qui sont montés en parallèles et commandés en modulation de sorte qu'un seul circuit régulateur 7 soit actif à un instant donné. Les signaux fournis par les circuits régulateurs sont envoyés vers un convertisseur continu/alternatif 8 chargé de transformer une tension continue en tension alternative pour la sortir Sout.

Un inconvénient de cette installation vient de l'utilisation des diodes de protection appelées aussi diodes Bypass. En effet, ces diodes sont des composants qui consomment de la puissance et font baisser le rendement de l'installation solaire. Or, le rendement est aujourd'hui une caractéristique très importante si on peut que cette source d'énergie puisse, à terme, remplacer les énergies fossiles actuelles.

Ces diodes ont également l'inconvénient d'être fragiles et chères ce qui impose d'y faire attention. On comprend alors que ces diodes doivent être soudées à la main car l'utilisation d'un procédé automatisé entrainerait un risque de casse important et donc un coût également important.

### RESUME DE L'INVENTION

La présente invention a pour but de s'affranchir des inconvénients en fournissant un dispositif électronique à module énergétique plus simple à réaliser, meilleur marché et qui garantit une protection du module énergétique tout en ayant un rendement amélioré.

A cet effet, l'invention concerne un dispositif électronique comprenant un module énergétique relié à un système onduleur, ledit module énergétique comprenant une pluralité de moyens pour produire de l'électricité à partir d'énergie renouvelable connectée en série, lesdits moyens pour produire de l'électricité à partir d'énergie renouvelable étant regroupés en groupe, caractérisé en ce que le système onduleur comprend une pluralité de circuits régulateurs, chaque circuit régulateur étant connecté à un groupe de moyens pour produire de l'électricité à partir d'énergie renouvelable de sorte que chaque groupe de moyens pour produire de l'électricité à partir d'énergie renouvelable puisse être commandé séparément.

Dans un premier mode de réalisation avantageux, le système onduleur comprend en outre un microcontrôleur pour commander en modulation de largeur d'impulsion les circuits régulateurs.

Dans un second mode de réalisation avantageux, les circuits régulateurs permettent de suivre le point de puissance maximale des moyens pour produire de l'électricité à partir d'énergie renouvelable.

Dans un troisième mode de réalisation avantageux, chaque groupe comprend un nombre de moyens pour produire de l'électricité à partir d'énergie renouvelable identiques.

Dans un autre mode de réalisation avantageux, les moyens pour produire de l'électricité à partir d'énergie renouvelable sont des cellules photovoltaïques.

Dans un autre mode de réalisation avantageux, les moyens pour produire de l'électricité à partir d'énergie renouvelable sont des éoliennes.

Dans un autre mode de réalisation avantageux, les moyens pour produire de l'électricité à partir d'énergie renouvelable sont des turbines hydroélectriques.

L'avantage de ce dispositif est d'avoir chaque groupe de cellules photovoltaïques qui est commandé de façon indépendante. Cela permet ainsi de réguler chaque groupe individuellement.

Par ailleurs, cette configuration permet de simplifier la connectique des panneaux solaires car ceux-ci ne comprennent plus de diodes intégrées. En effet, comme chaque circuit régulateur est directement connecté aux bornes d'un groupe de cellules photovoltaïques, le courant ne peut pas passer d'un groupe à un autre. Les diodes de protection qui bloquent le courant et l'empêchent d'aller d'un groupe à un autre ne sont donc plus nécessaires. Les coûts de fabrication sont donc diminués et le processus de fabrication est simplifié car les panneaux solaires ne comprennent plus de composant en dehors des cellules photovoltaïques.

### BREVE DESCRIPTION DES FIGURES

Les buts, avantages et caractéristiques de la présente invention ressortiront plus clairement de la description détaillée qui suit d'un exemple de réalisation du dispositif électronique selon l'invention, cet exemple étant donné à titre purement illustratif et non limitatif seulement en liaison avec le dessin annexé sur lequel:
- la figure 1 représente une unité énergétique selon l'art antérieur ;
- la figure 2 représente une unité énergétique selon l'invention ;
- la figure 3 représente un circuit régulateur selon l'invention ; et
- les figures 4 à 6 représentent chacune un diagramme de commande des régulateurs de l'unité énergétique selon l'invention.
- les figures 7A, 7B et 7C représentent différentes phases de fonctionnement de l'unité énergétique selon l'invention.

### DESCRIPTION DETAILLEE

En se référant à la figure 2, on peut voir un dispositif électronique tel qu'une unité énergétique 10 selon la présente invention. Cette unité énergétique 10 comprend un module énergétique 19 connecté à un système onduleur 100. Ce module énergétique 19 est constitués d'une pluralité de moyens 18 pour produire de l'électricité comme par exemple des moyens pour produire de l'électricité à partir d'énergie renouvelable. Par exemple le module énergétique 19 est un module solaire 20 ou panneau solaire. Le panneau solaire 20 comprend une pluralité de cellules photovoltaïques 21. Chaque cellule photovoltaïque 21 comprend une borne positive et une borne négative. Les cellules photovoltaïques 21 sont connectées en série. Bien entendu, on comprendra que le module solaire 20 de l'unité énergétique 10 peut être remplacé par un module éolien comprenant des éoliennes ou mini-éoliennes connectées en série ou par un module électrohydraulique comprenant des turbines ou mini turbines électrohydrauliques connectées en série. De même, le module solaire 20 de l'unité énergétique 10 peut être remplacé par un module électrochimique comprenant des cellules électrochimiques connectées en série.

Ces cellules photovoltaïques 21 sont regroupées en groupe 22 de sorte que chaque groupe 22 est formé par au moins une cellule photovoltaïque 21 ou, de préférence, par plusieurs cellules photovoltaïques 21 contigües. Chaque groupe 22 de cellules photovoltaïques comprend alors une borne positive et une borne négative. On comprendra que la borne positive de la première cellule photovoltaïque 21 du groupe est la borne positive du groupe et que la borne négative de la dernière cellule photovoltaïque 21 du groupe est la borne négative du groupe. De préférence, les groupes 22 de cellules photovoltaïques peuvent comprendre un nombre identique ou différent de cellules photovoltaïques 21.

Le système onduleur 100 comprend une pluralité de circuits régulateurs 40 connectés en parallèle. Chaque circuit régulateur 40, visible à la figure 3, comprend un transformateur T1 en série avec des moyens de commutation C1. Chaque circuit régulateur 40 comprend en outre un moyen de mesure de courant I1 monté en série des moyens de commutations C1. Le transformateur T1, les moyens de commutation C1 et le moyen de mesure de courant I1 sont montés en parallèle des cellules photovoltaïques 21. Chaque circuit régulateur 40 comprend également un redresseur R1 connecté en sortie du transformateur T1 pour fournir une tension intermédiaire. On comprend donc que chaque circuit régulateur 40 comprend son propre redresseur R1.

De préférence, chaque circuit régulateur 40 est un régulateur MPPT (Maximum Power Point Tracking) c'est-à-dire un circuit régulateur 40 permettant de suivre le point de puissance maximale d'un générateur électrique non linéaire. En effet, un générateur photovoltaïque est un générateur dont la caractéristique du courant en fonction de la tension est fortement non linéaire. En conséquence, pour un même éclairement, la puissance délivrée sera différente selon la charge. Un circuit régulateur 40 MPPT permet donc de piloter le convertisseur statique reliant la charge (une batterie par exemple) et le panneau photovoltaïque, c'est-à-dire le module solaire 20, de manière à fournir en permanence le maximum de puissance à la charge.

L'unité énergétique 10 comprend en outre un microcontrôleur 80 commande les circuits régulateurs 40 via une commande décalée temporellement. En d'autres termes, les circuits régulateurs 40 sont commandés en modulation de largeur d'impulsion et sont commutés successivement dans une fenêtre temporelle déterminée. Pour cela, le microcontrôleur 80 envoie un signal vers les moyens de commutation C1 de chaque circuit régulateur 40.

Avantageusement selon l'invention, chaque groupe 22 de cellules photovoltaïques 21 est directement connecté, par ses bornes positives et négatives, à un circuit régulateur 40 de sorte que les groupes de cellules photovoltaïques 21 soient montés en parallèles les uns par rapport aux autres. Cette disposition permet de rendre indépendant les différents groupes 22. De plus, cette indépendance des groupes 2 entre eux permet que chaque groupe 22 de cellules photovoltaïques 21 soit protégé. En effet, avoir des groupes de cellules photovoltaïques 22 indépendants les uns des autres, c'est à dire que chaque groupe est connecté à un circuit régulateur, permet d'éviter que le courant d'un groupe se propage dans un autre groupe. Effectivement, en cas de problème sur une cellule photovoltaïque 21, une anomalie de courant apparaît et les circuits régulateurs 40 tendent à essayer de minimiser cette anomalie. Cette anomalie tend alors à se propager aux autres cellules 21. Par contre, avec des groupes 22 de cellules photovoltaïques 21 indépendants les uns des autres, une anomalie de courant se propagera aux autres cellules 21 du groupes 22 de cellules photovoltaïques mais pas dans les autres groupes de cellules photovoltaïques.

Chaque groupe 22 de cellules photovoltaïques 21 est donc contrôlé individuellement et l'optimisation est également réalisée individuellement pour chaque groupe 22. En effet, comme chaque groupe 22 comprend son propre circuit régulateur 40, chaque régulateur agit de façon indépendante. De ce fait, si une des cellules photovoltaïques 21 d'un groupe perd en efficacité, le circuit régulateur 40 du groupe corrige.

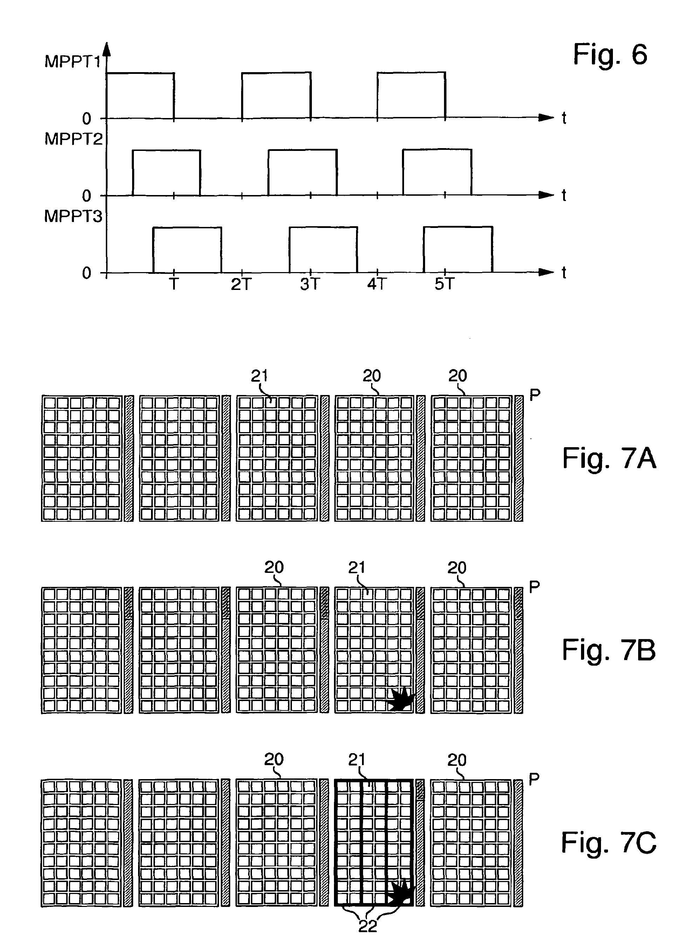

De plus, ce contrôle individuel des groupes 22 de cellules photovoltaïques 21 permet de moins impacter les modules énergétiques 19. Effectivement, dans ce type d'installation, le contrôle par les circuits régulateurs 40 se fait de sorte que toutes les cellules photovoltaïques 21 soient alimentés par un même courant. A la figure 7A, on voit que sans ombre sur la pluralité de modules solaires 20 comprenant une pluralité de cellules photovoltaïques 21. On voit que chaque module 20 délivre une puissance P.

Par conséquent, si les cellules photovoltaïques 21 ne sont pas en groupes, la diminution de courant d'une cellule photovoltaïque 21 due à une ombre entraînent alors la diminution du courant dans toute les cellules photovoltaïques 21 comme visible à la figure 7B.

Avec la configuration de l'invention dans laquelle les cellules 21 photovoltaïques sont regroupés en groupe 22 de cellules photovoltaïques chacun contrôlé par un circuit régulateur, la présence d'une ombre au niveau d'une cellule photovoltaïque 21 d'un groupe 22 de cellules photovoltaïques n'affecte que ledit groupe 22 et non pas les autres. De ce fait, les autres groupes 22 de cellules photovoltaïques continuent de fonctionner au maximum de leur possibilité comme visible à la figure 7C.

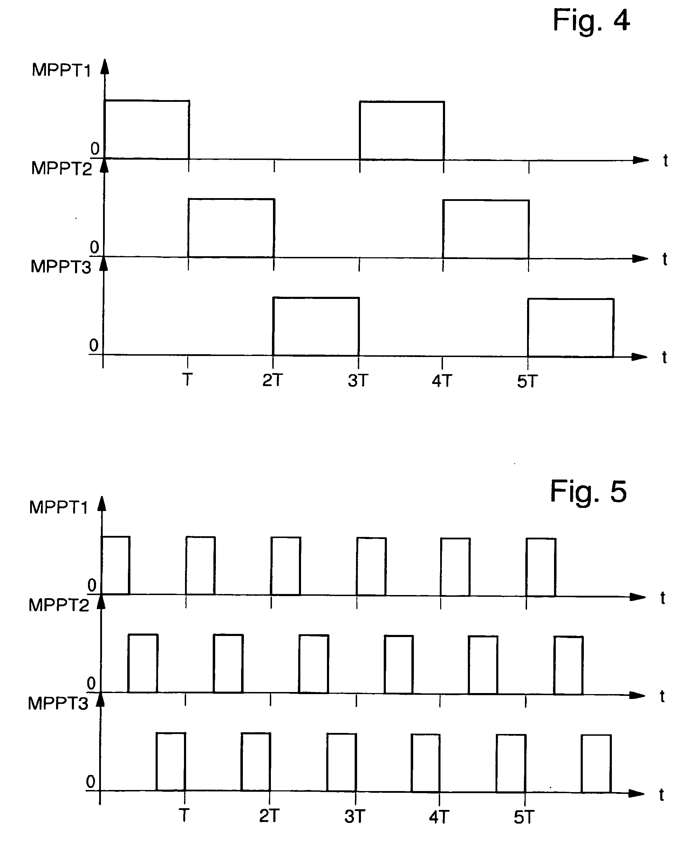

Pour la commande de ces circuits régulateurs 40, une commande en modulation de largeur d'impulsion comme visible aux figures 4 à 6 est utilisée. Cette commande consiste à agir sur les moyens de commutation C1 de chaque circuit régulateur 40 MPPT1, MPPT2 et MPPT3 de sorte que ces circuits régulateurs 40 soient plus ou moins passants. La commande est envoyée vers les circuits régulateurs 40 de sorte qu'un seul circuit régulateur 40 soit passant à un instant donné.

Pour cela, il est envisageable que la commande des circuits régulateurs 40 soit déphasée. En effet, en déphasant les signaux de commande des circuits régulateurs 40, on peut adapter le fonctionnement de l'unité énergétique 40 en fonction de la puissance demandée en sortie de l'unité énergétique 10. Ainsi, en cas de faible puissance, la commande par décalage de signal est configurée de sorte qu'à chaque période de temps, un circuit régulateur est activé. Cela signifie que chaque circuit régulateur 40 est activé une fois toutes les trois périodes comme visible à la figure 4.

Pour des puissances demandées plus élevées, il peut être prévu, comme visible aux figures 5 et 6, que les circuits régulateurs 40 soient activés dans la même période mais déphasés. Cette configuration permet de commuter les circuits variateurs 40 de sorte à faire passer plus de courant et donc une puissance supérieure. Cela signifie donc que lors de chaque période, la totalité des circuits régulateurs sont activés de sorte qu'un seul circuit régulateur 40 soit actif à un instant donné comme visible à la figure 5.

Dans le cas présent représentés à la figure 2 avec 3 groupes de cellules photovoltaïques avec une forte puissance demandée, le décalage est d'un tiers de période soit T/3 de sorte qu'à l'instant t = 0, le premier circuit régulateur 40 MPPT1 s'active, avec une largeur d'impulsion allant de 0 à T/3. A t = T/3, le second circuit régulateur 40 MPPT2 s'active avec une largeur d'impulsion allant de T/3 à 4T/3. A t = 2T/3, le troisième circuit régulateur 40 MPPT3 s'active avec une largeur d'impulsion allant de 2T/3 à 5T/3 comme visible à la figure 6. Les activations se chevauchent.

Cette façon de commander les circuits régulateurs 40 MPPT1, MPPT2 et MPPT3 permet de virtuellement augmenter la fréquence de fonctionnement. En effet, au lieu de voir une activation des circuits régulateurs 40 MPPT1, MPPT2 et MPPT3 par période, on voit trois activations par période comme visible à la figure 5. Plus particulièrement, ce sont les composants comme les condensateurs de découplage qui voient une augmentation de la fréquence d'activation des circuits régulateurs 40.

Or, les condensateurs ont une impédance qui est dépendante de la fréquence. Par conséquent, si la fréquence augmente, il est possible de réduire la valeur du condensateur tout en gardant la même impédance. De plus, comme la taillé et les coûts d'un condensateur sont liés à sa valeur en farad, une diminution de celle-ci entraîne une diminution de la taille et du prix des condensateurs de découplage sans diminuer leur efficacité.

Les signaux fournis par des circuits régulateurs sont envoyé vers un étage convertisseur DC/AC 50 c'est-à-dire un étage qui convertit la tension continu fournie par les circuits régulateurs 40 MPPT en un courant alternatif compatible avec le réseau. La tension fournie en sortie Sout de cet étage convertisseur DC/AC 50 est, par exemple, une tension alternative de 110 à 230VAC et de fréquence 50 à 60 Hz.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

## Revendications

1. Dispositif électronique (10) comprenant un module énergétique (19) relié à un système onduleur (100), ledit module énergétique comprenant une pluralité de moyens (18) pour produire de l'électricité à partir d'énergie renouvelable connectée en série, lesdits moyens (18) pour produire de l'électricité à partir d'énergie renouvelable étant regroupés en groupe (22), **caractérisé en ce que** le système onduleur comprend une pluralité de circuits régulateurs (40), chaque circuit régulateur étant connecté à un groupe de moyens (18) pour produire de l'électricité à partir d'énergie renouvelable de sorte que chaque groupe (22) de moyens pour produire de l'électricité à partir d'énergie renouvelable puisse être commandé séparément.

2. Dispositif électronique selon la revendication 1, **caractérisé en ce que** le système onduleur (100) comprend en outre un microcontrôleur (80) pour commander en modulation de largeur d'impulsion les circuits régulateurs (40).

3. Dispositif électronique selon les revendications 1 ou 2, **caractérisé en ce que** les circuits régulateurs (40) permettent de suivre le point de puissance maximale des moyens (18) pour produire de l'électricité à partir d'énergie renouvelable.

4. Dispositif électronique selon l'une des revendications précédentes, **caractérisé en ce que** chaque groupe (22) comprend un nombre de moyens (18) pour produire de l'électricité à partir d'énergie renouvelable identiques.

5. Dispositif électronique selon l'une des revendications précédentes, **caractérisé en ce que** les moyens (18) pour produire de l'électricité à partir d'énergie renouvelable sont des cellules photovoltaïques (21).

6. Dispositif électronique selon l'une des revendications précédentes, **caractérisé en ce que** les moyens (18) pour produire de l'électricité à partir d'énergie renouvelable sont des éoliennes.

7. Dispositif électronique selon l'une des revendications 1 à 5, **caractérisé en ce que** les moyens (18) pour produire de l'électricité à partir d'énergie renouvelable sont des turbines hydroélectrique.

## Patentansprüche

1. Elektronische Vorrichtung (10), die ein energetisches Modul (19) umfasst, das mit einem Wechselrichtersystem (100) verbunden ist, wobei das energetische Modul mehrere Mittel (18) zum Erzeugen von Elektrizität aus erneuerbarer Energie, die in Reihe geschaltet sind, umfasst, wobei die Mittel (18) zum Erzeugen von Elektrizität aus erneuerbarer Energie in Gruppen (22) angeordnet sind, **dadurch gekennzeichnet, dass** das Wechselrichtersystem mehrere Regulierungsschaltungen (40) umfasst, wobei jede Regulierungs-schaltung mit einer Gruppe von Mitteln (18) zum Erzeugen von Elektrizität aus erneuerbarer Energie verbunden ist, derart, dass jede Gruppe (22) von Mitteln zum Erzeugen von Elektrizität aus erneuerbarer Energie getrennt gesteuert werden kann.

2. Elektronische Vorrichtung nach Anspruch 1, **dadurch gekennzeichnet, dass** das Wechselrichtersystem (100) außerdem einen Mikrocontroller (80) umfasst, um eine Impulsbreitenmodulation der Regulierungsschaltungen (40) zu steuern.

3. Elektronische Vorrichtung nach einem der Ansprüche 1 oder 2, **dadurch gekennzeichnet, dass** die Regulierungsschaltungen (40) ermöglichen, dem Punkt maximaler Leistung der Mittel (18) zum Erzeugen von Elektrizität aus erneuerbarer Energie zu folgen.

4. Elektronische Vorrichtung nach einem der vorhergehenden Ansprüche, **dadurch gekennzeichnet, dass** jede Gruppe (22) eine Anzahl gleicher Mittel (18) zum Erzeugen von Elektrizität aus erneuerbarer Energie umfasst.

5. Elektronische Vorrichtung nach einem der vorhergehenden Ansprüche, **dadurch gekennzeichnet, dass** die Mittel (18) zum Erzeugen von Elektrizität aus erneuerbarer Energie Photovoltaik-Zellen (21) sind.

6. Elektronische Vorrichtung nach einem der vorhergehenden Ansprüche, **dadurch gekennzeichnet, dass** die Mittel (18) zum Erzeugen von Elektrizität aus erneuerbarer Energie Windkraftanlagen sind.

7. Elektronische Vorrichtung nach einem der Ansprüche 1 bis 5, **dadurch gekennzeichnet, dass** die Mittel (18) zum Erzeugen von Elektrizität aus erneuerbarer Energie hydroelektrische Turbinen sind.

## Claims

1. Electronic device (10) comprising a power supply module (19) connected to a converter system (100), wherein said power supply module comprises a plurality of elements (18) for producing electricity from renewable energy connected in series and said elements (18) for producing electricity from renewable energy are assembled in groups (22), **characterised in that** the converter system comprises a plurality of regulator circuits (40), each regulator circuit being connected to a group of elements (18) for producing electricity from renewable energy so that each group (22) of elements for producing electricity from renewable energy can be controlled separately.

2. Electronic device according to claim 1, **characterised in that** the converter system (100) additionally comprises a microcontroller (80) for controlling the regulator circuits (40) by pulse width modulation.

3. Electronic device according to claims 1 or 2, **characterised in that** the regulator circuits (40) enable tracking of the maximum power point of the elements (18) for producing electricity from renewable energy.

4. Electronic device according to one of the preceding claims, **characterised in that** each group (22) comprises a identical number of elements (18) for producing electricity from renewable energy.

5. Electronic device according to one of the preceding claims, **characterised in that** the elements (18) for producing electricity from renewable energy are photovoltaic cells (21).

6. Electronic device according to one of the preceding claims, **characterised in that** the elements (18) for producing electricity from renewable energy are wind turbines.

7. Electronic device according to claims 1 to 5, **characterised in that** the elements (18) for producing electricity from renewable energy are hydroelectric turbines.
